# EUROPEAN PATENT APPLICATION

(11) **EP 1 101 636 A1**
(43) Date of publication of application: **23.05.2001**
(21) Application number: 00124741.0
(22) Date of filing: 13.11.2000
(51) Int. Cl.: B60G 21/055, B60G 15/07

(54) **Stabilizing arrangement for vehicle suspensions**

(30) Priority: 16.11.1999 KR 9950842
(71) Applicant: KIA MOTORS CORPORATION, Youngdeungpo-gu, Seoul (KR)
(72) Inventor: Cho, Seong Un, Incheon 405-762 (KR)
(74) Representative: Viering, Jentschura & Partner

(57) **Abstract**

A stabilizer in which a shock absorber bracket (20) is fixedly engaged with the upper end of the control link (30) at the center of the shock absorber (10) on which the coil spring (50) is installed. A stabilizer (40) is engaged with the lower end of the control link (30) of which upper end is engaged with the shock absorber bracket (20). In case that the wheels in opposite on the drum of the vehicle are simultaneously actuated, the stabilizer (40) twists to make momentum of the wheels in opposite the same, to prevent the body from being inclined. When the right and left wheels receive the impact or rebound during cornering, the stabilizer (40), shock absorber (10) and the coil spring (50) are simultaneously actuated to maintain roll stiffness to keep the balance of the vehicle, so that passenger's comfort is improved. The stabilizer (40) may absorb and disperse impact load applied to the tire from the road condition, thereby improving the steering capability.

## Description

### BACKGROUND OF THE INVENTON

### 1.Field of the Invention

The present invention relates to a stabilizer of the vehicle and more particularly to a stabilizer structure for maintaining roll stiffness to keep the balance by actuating the shock absorber, coil spring and stabilizer despite impact or rebound applied to right and left wheels.

### 2. Description of the Related Art

Generally, the vehicles include a coil spring for buffering vibrations from the road condition, shock absorber for improving driver's comfort by controlling free vibrations of the coil spring, and the stabilizer for preventing rolling of the car.

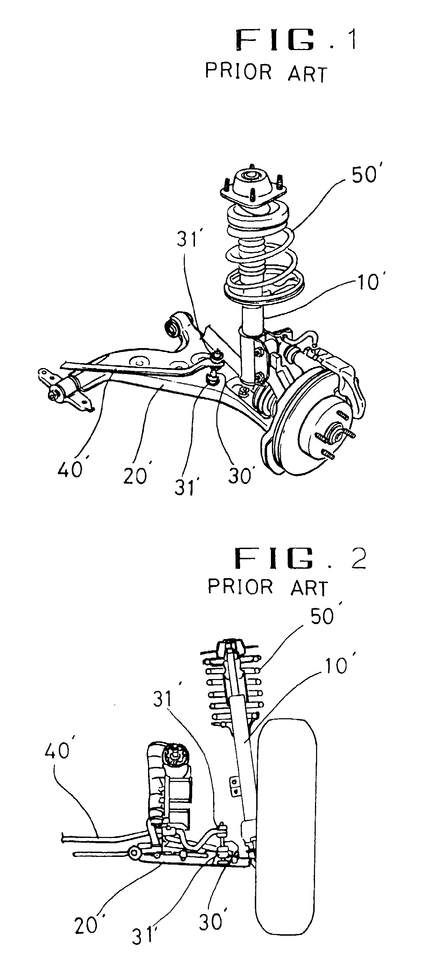

Conventional stabilizer structure is shown in Figs. 1 and 2, in which the lower end of the control link 30' is engaged by nut with one part of lower arm 20' on which one end of the shock absorber 10' is installed. On the upper part of the control link 30' engaged with the nut 31' one end of the stabilizer 40' is engaged with the nut 31'.

One end of the stabilizer 40' is engaged by nut 31' on the upper end of the control link 30' of which lower end is engaged with the end of lower arm 20', so that the wheels in opposite are driven. The stabilizer 40' twists to make the wheels to simultaneously drive, thereby serving to prevent the vehicle body from being inclined.

However, this type of stabilizer 40' allows installation only by nut engagement on the upper end of the control link 30' of which lower end is nut engaged on the lower arm 20'. This installation structure has a disadvantage that the stabilizer 40' is not actuated at the time of impact or rebound applied to the wheels in opposite.
Accordingly, it is necessary to establish high constant of the coil spring 50' in order to maintain roll stiffness by the shock absorber 10' and the coil spring 50' disposed around the shock absorber 10'.

However, maintaining roll stiffness during cornering by the shock absorber 10' and the coil spring 50 to increase constant value of the coil spring 50' makes elasticity of the coil spring 50' low, thereby resulting in passengers' discomfort.

### SUMMARY OF THE INVENTION

Accordingly, it is an object of the present invention to solve the above disadvantages of the conventional stabilizer.

In order to achieve the object of the present invention, there is provided a stabilizer structure including a shock absorber bracket engaged with the upper end of the control link 30 at the center of the shock absorber 10 on which the coil spring 50 is installed. A stabilizer 40 is engaged with the lower end of the control link 30 of which upper end is engaged with the shock absorber bracket 20. In case that the wheels in opposite on the drum of the vehicle are simultaneously actuated, the stabilizer 40 twists to make the wheels to simultaneously drive, so as to prevent the body from being inclined. When the right and left wheels receive the impact or rebound during cornering, the stabilizer 40, shock absorber 10 and the coil spring 50 are simultaneously actuated to keep roll stiffness, thereby improving the passenger's comfort. The stabilizer 40 may absorb and disperse impact load applied to the tire from the road condition, thereby improving the steering capability.

### BRIEF DESCRIPTION OF THE DRAWINGS

The present invention will become more fully understood from the detailed description given hereinbelow and the accompanying drawings which are given by way of illustration only, and thus, are not limitative of the present invention, and wherein:
Fig. 1 is a perspective view of the conventional stabilizer structure;
Fig. 2 is a front view of the stabilizer structure of Fig. 1; and

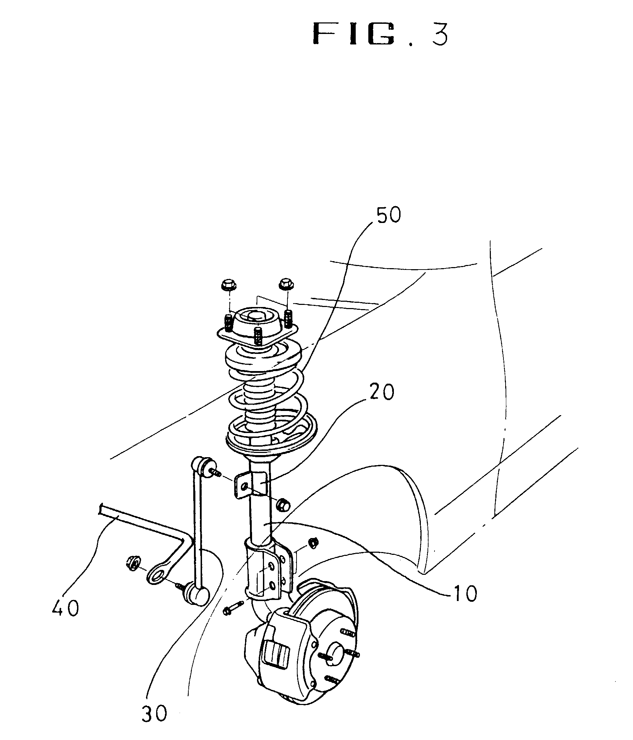

Fig. 3 is an exploded perspective view of the stabilizer according to the present invention.

### DESCRIPTION OF THE PREFERRED EMBODIMENTS

As shown in Fig. 2, it is shown the stabilizer structure including a shock absorber bracket fixedly engaged with the upper end of the control link 30 at the center of the shock absorber 10 on which the coil spring 50 is installed. A stabilizer 40 is engaged with the lower end of the control link 30 of which upper end is engaged with the shock absorber bracket 20.

In case that the wheels in opposite on the drum of the vehicle are simultaneously actuated, the stabilizer 40 twists to make momentum of the wheels in opposite the same, to prevent the body from being inclined. When the right and left wheels receive the impact or rebound during cornering, the stabilizer 40, shock absorber 10 and the coil spring 50 are simultaneously actuated to maintain roll stiffness to keep the balance of the vehicle. The stabilizer 40 functions to absorb and disperse impact load applied to the tire from the road condition, thereby improving the steering capability.

When the vehicle receives the exterior impact, the stabilizer 40, shock absorber 10 and the coil spring 50 function to maintain roll stiffness to keep the balance of the vehicle, so that the passenger's comfort is improved. The stabilizer 40 of the present invention functions to absorb and disperse the impact load applied to the tire from the road condition, so that the steering capability is improved.

## Claims

1. Stabilizer for use in an vehicle, characterized in that a shock absorber bracket fixedly engaged with the upper end of the control link (30) at the center of the shock absorber (10) on which the coil spring (50) is installed, the stabilizer (40) engaged with the lower end of the control link (30) of which upper part is engaged with the shock absorber bracket (20).
